# EUROPEAN PATENT SPECIFICATION

(11) **EP 1 205 689 B1**
(45) Date of publication and mention of the grant of the patent: **17.09.2003**
(21) Application number: 00830740.7
(22) Date of filing: 09.11.2000
(51) Int. Cl.: F16H 55/22, F16H 55/08

(54) **Worm gear reduction unit and worm wheel**
Schneckenreduktionsgetriebe und Schneckenrad
Réducteur à vis sans fin et engrenage à vis sans fin

(43) Date of publication of application: 15.05.2002
(73) Proprietor: Bonfiglioli Riduttori S.p.A., 40012 Calderara di Reno (IT)
(72) Inventor: Bonfiglioli, Clementino, 40136 Bologna (IT)
(74) Representative: Eccetto, Mauro

(56) References cited:
- DE-A- 2 323 958
- US-A- 3 728 907

## Description

The present invention relates to a gear reduction unit.

The most commonly used gear reduction units for achieving a high gear ratio are worm and wheel types. In most cases the worms are cylindrical and the wheels are globoidal. The mesh between the worm and the wheel is realised on the line contact.

In the art several profiles for the teeth of this kind of gears are well known.

In particular the following types are known:
- ZA-type, wherein the worm threads are trapezoidal in the axial plane;
- ZN-type, wherein the worm threads are trapezoidal in the normal plane;
- ZK-type, wherein the tool threads for manufacturing the worm are trapezoidal in the normal plane;
- ZI-type, wherein the worm threads are involutes in the transverse section; and
- ZC-type, wherein the worm threads are concave in the axial plane.

The ZA-, ZN-, ZK- and ZI-types are characterized in that the mesh is always a convex/convex pairing. On the contrary, the ZC-type foresees a concave/convex pairing.

A convex/convex pairing leads to contact lines having very small width.

For concave/convex pairing the width of the contact lines is significantly higher, which leads to lower Hertzian pressure and higher lubricant film thickness. Because of the above the ZC-type gears have many advantages in load capacity and efficiency.

However, in this kind of pairing a disadvantage is represented by the fact that the worm deflection is significantly higher, if compared with the other aforesaid types, because of the concave profile at the worm side.

The ZC-type profile is described in Patent Application DE-A-2,323,958. The worm extends along a given axis and comprises concave-sided threads; and the wheel comprises convex-sided teeth substantially complementary to the sides of the thread so that the thread and a meshing tooth contact along a line as opposed to one point.

In particular, Patent Application DE-A-2,323,958 is aimed at determining the number of wheel teeth in relation to a given gear ratio to maximize the load capacity of the concave sides of the threads. Though indeed successful in enabling the production of reduction units featuring worms with high load capacity sides, in the gear reduction unit described in Patent Application DE-A-2,323,958 the stiffening effect of the threads is much lower compared to the other types because of the concave shape of the threads. As stated above, this fact leads to a larger worm deflection. To avoid this drawback ZC-type worm gears normally have larger diameter quotients (ratio mean diameter/module), which has normally a negative influence on the efficiency because the lead angle becomes smaller.

Another embodiment of a gear reduction unit of the kind described in the present application, is illustrated in US-A-3,728,907 which shows the features of the preamble of claim 1. However, the profiles according to US-A-3, 728, 907 lead to such contact lines where parts of them look like closed loops or form acute angels.

It is an object of the present invention to provide a gear reduction unit designed to eliminate the aforementioned drawbacks.

According to the present invention, there is provided a gear reduction unit as per claim 1.

According to the invention, the worm is stiffened by making the thread stumpier than those of known reduction units, and the wheel teeth have concave sides complementary to the thread sides to distribute contact between the thread and the meshing tooth along a line and so achieve a high load capacity of the sides.

Research by the Applicant has revealed that inverting the shape of the thread and wheel teeth sides with respect to the gear reduction unit in DE-A-2/323,958 has a synergic effect, i.e. provides for maintaining a high load capacity of the thread sides combined with a high degree of stiffness of the worm.

In other words, it is an object of the present invention to provide a gear reduction unit comprising a worm and a wheel connected to the worm, which has the advantages of the ZC-type profile but avoids its drawbacks.

The new profile envisaged in the present invention is called ZB-type. For the ZB-type profile the worm threads are convex in the axial plane, wherein the wheel teeth are concave in the axial plane.

Furthermore, the solution proposed by the present invention is also contrary to all the teachings to be found in literature because convex/concave pairing in most cases leads to point teeth at the worm. To avoid this the tooth thickness of the worm and the wheel at the working pitch diameter are not the same for the ZB-type, as they are normally for the other types.

The present invention also relates to a specially shaped wheel for use in the reduction unit which is the main object of the present invention.

According to the present invention, therefore, there is also provided a wheel for a gear reduction unit comprising a worm connected to said wheel; said wheel having teeth with second sides; and the wheel being characterized in that said second sides are concave in the axial section.

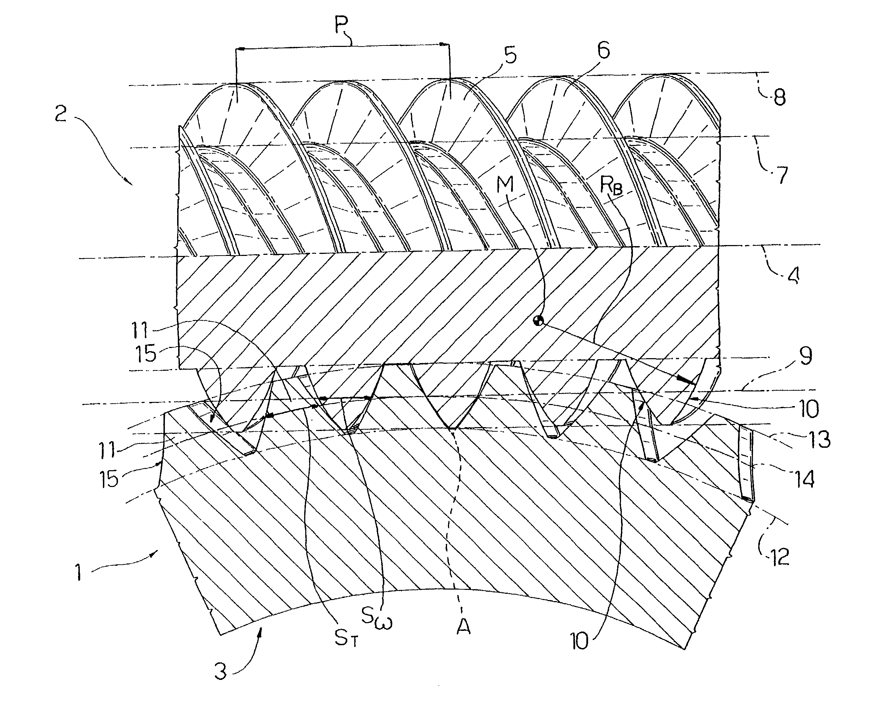

The present invention will be described with reference to the accompanying drawing, which shows a side view, with parts in section and parts removed for clarity, of a gear reduction unit.

Number 1 in the accompanying drawing indicates as a whole a gear reduction unit having a worm 2 and a wheel 3. Worm 2 is made of steel, comprises an axis 4 and one or more threads. In the embodiment represented in the alleged figure two threads 5 and 6 are provided. Each thread 5, 6 is winding about axis 4 in a helix of pitch P, has a minor cylinder 7 and a major cylinder 8 between which threads 5 and 6 extend, and defines a pitch plane 9. Each of threads 5 and 6 comprises two opposite sides 10, each of which, in the axial section in the accompanying drawing, has a concave contour with a mean curvature radius R_{B} and a center of curvature M. Radius R_{B} is greater than the radial distance between minor cylinder 7 and major cylinder 8; the center of curvature M is located within minor cylinder 7; the contours of opposite sides 10 intersect hypothetically at a point A located outside and at major cylinder 8; and threads 5 and 6 are of a thickness S_{W} measured along pitch plane 9.

Wheel 3 is made preferably, but not necessarily, of bronze and comprises an axis (not shown) perpendicular to the plane of the accompanying drawing; a number of teeth 11 equally spaced about said axis not shown; a minor cylinder 12 and a major cylinder 13 between which teeth 11 extend; and a pitch circle 14 tangent to pitch plane 9.

Each tooth 11 comprises two opposite sides 15 which, in the axial section (axis 4 of worm 2) in the accompanying drawing, have a contour complementary to that of sides 10 of threads 5 and 6; and each tooth 11 is of a thickness S_{T}, measured along pitch circle 14, normally different from the thickness S_{W} of threads 5 and 6.

In actual use, worm 2 is rotated about axis 4 by a motor (not shown) and transmits motion to wheel 3 by threads 5 and 6 meshing with some of teeth 11 referred to as meshing teeth 11. Motion is transmitted along a line of contact between one of threads 5 and 6 and each meshing tooth 11.

In a variation not shown, the worm comprises only one convex-sided thread meshing with one concave-sided tooth of the wheel.

## Claims

1. A gear reduction unit (1) comprising a worm (2) and a wheel (3) operatively connected to the worm (2), which comprises at least one thread (5, 6) having first sides (10); said wheel (3) having teeth (11) having second sides (15) complementary to said first sides (10) so that the thread (5, 6) meshes with at least one tooth (11) at a time along a given line; wherein said first sides (10) are convex in the axial section and said second sides (15) are concave in the axial section; the gear reduction unit (1) being **characterized in that** said worm (2) has a minor cylinder (7) and a major cylinder (8); each first side (10) having a contour with only one given radius (R_{B}) and only one given center (M) of curvature.

2. The reduction unit (1) as claimed in Claim 1, **characterized in that** said given radius (R_{B}) is greater than the radial distance between said minor cylinder (7) and said major cylinder (8); said center (M) of curvature being within said minor cylinder (7).

3. The reduction unit (1) as claimed in one of the foregoing Claims, **characterized in that** said worm (2) defines a pitch plane (9), and said wheel (3) defines a pitch circle (14) tangent to said pitch plane (9); the thread (5, 6) having a first thickness (SW) along the pitch plane (9); each tooth (11) having a second thickness (ST) along the pitch circle (14); and said second thickness (ST) is different from said first thickness (SW) of said thread (5, 6).

4. A wheel (3) for a gear reduction unit comprising a worm (2) operatively connected to said wheel (3); the wheel (3) having teeth (11) with second sides (15); and the wheel (3) being **characterized in that** said second sides (15) are concave in the axial section.

## Patentansprüche

1. Untersetzungsgetriebe (1), das eine Schnecke (2) und ein Rad (3) aufweist, das in Wirkverbindung mit der Schnecke (2) verbunden ist, die wenigstens eine Windung (5, 6) aufweist, die erste Seiten (10) besitzt; wobei das Rad (3) Zähne (11) besitzt, die zweite Seiten (15) besitzen, komplementär zu den ersten Seiten (10), so daß die Windung (5, 6) in wenigstens einen Zahn (11) zu einer Zeit entlang einer vorgegebenen Linie eingreift; wobei die ersten Seiten (10) konvex im Axialabschnitt sind, und die zweiten Seiten (15) konkav im Axialabschnitt sind; wobei das Untersetzungsgetriebe **dadurch gekennzeichnet ist, daß** die Schnecke (2) einen kleineren Zylinder (7) und einen größeren Zylinder (8) besitzt; wobei jede erste Seite (10) eine Kontur mit nur einem vorgegebenen Radius (R_{B}) und nur einem vorgegebenen Krümmungsmittelpunkt (M) besitzt.

2. Untersetzungsgetriebe (1) gemäß Anspruch 1, **dadurch gekennzeichnet, daß** der vorgegebene Radius (R_{B}) größer als der radiale Abstand zwischen dem kleineren Zylinder (7) und dem größeren Zylinder (8) ist; wobei der Krümmungsmittelpunkt (M) in dem kleineren Zylinder (7) liegt.

3. Untersetzungsgetriebe (1) gemäß einem der vorgenannten Ansprüche, **dadurch gekennzeichnet, daß** die Schnecke (2) eine Teilungsebene (9) definiert, und daß das Rad (3) einen Teilungskreis (14) definiert, der tangential zu der Teilungsebene (9) ist; wobei die Windung (5, 6) eine erste Dicke (SW) entlang der Steigungsebene (9) besitzt, wobei jeder Zahn (11) eine zweite Dicke (ST) entlang des Teilungskreises (14) besitzt; und wobei die zweite Dicke (ST) unterschiedlich zu der ersten Dicke (SW) der Windung (5, 6) ist.

4. Rad (3) für ein Untersetzungsgetriebe, aufweisend eine Schnecke (2), die in Wirkverbindung mit dem Rad (3) verbunden ist; wobei das Rad (3) Zähne (11) mit den zweiten Seiten (15) besitzt; und wobei das Rad (3) **dadurch gekennzeichnet, ist, daß** die zweiten Seiten (15) im Axialschnitt konkav sind.

## Revendications

1. Un réducteur (1) comprenant une vis sans fin (2) et une roue (3) raccordée de manière opérationnelle à la vis sans fin (2) qui comprend au moins un filetage (5, 6) doté de premiers côtés (10) ; ladite roue (3) ayant des dents (11) dotées de seconds côtés (15) complémentaires auxdits premiers côtés (10) de sorte que le filetage (5, 6) s'engrène avec au moins une dent (11) à la fois sur une ligne donnée ; dans laquelle lesdits premiers côtés (10) sont convexes dans la section axiale et lesdits seconds côtés (15) sont concaves dans la section axiale ; le réducteur (1) étant **caractérisée en ce que** ladite vis sans fin (2) possède un cylindre secondaire (7) et un cylindre principal (8) ; chaque premier côté (10) présentant un profil avec un seul rayon donné (R_{B}) et un seul centre donné (M) de courbure.

2. Le réducteur (1) selon la revendication 1, **caractérisée en ce que** ledit rayon donné (R_{B}) est supérieur à la distance radiale située entre ledit cylindre secondaire (7) et ledit cylindre principal (8) ; ledit centre (M) de courbure se trouvant à l'intérieur dudit cylindre secondaire (7).

3. Le réducteur (1) selon l'une quelconque des revendications précédentes, **caractérisée en ce que** ladite vis sans fin (2) définit un plan de pas (9), et ladite roue (3) définit un cercle primitif de fonctionnement (14) tangent audit plan de pas (9) ; le filetage (5, 6) présentant une première épaisseur (S_{W}) le long du plan de pas (9) ; chaque dent (11) présentant une seconde épaisseur (S_{T}) le long du cercle primitif de fonctionnement (14) ; et ladite seconde épaisseur (S_{T}) est différente de ladite première épaisseur (S_{W}) dudit filetage (5, 6).

4. Une roue pour un réducteur (3) comprenant une vis sans fin (2) raccordée de manière opérationnelle à ladite roue (3) ; la roue (3) ayant des dents (11) avec des seconds côtés (15) ; et la roue (3) étant **caractérisée en ce que** lesdits seconds côtés (15) sont concaves dans la section axiale.
